# EUROPEAN PATENT APPLICATION

(11) **EP 3 882 925 A1**
(43) Date of publication of application: **22.09.2021**
(21) Application number: 19884125.6
(22) Date of filing: 17.05.2019
(51) Int. Cl.: G21C 17/06

(54) **APPARATUS FOR MONITORING ALPHA CONTAMINATION OF NUCLEAR FUEL RODS**

(30) Priority: 16.11.2018 RU 2018140445
(71) Applicant: Public Joint Stock Company "Mashinostroitelny Zavod", Elektrostal, 144001 (RU)
(72) Inventor: CHEREVIK, Viktor Mikhaylovich, Elektrostal, Moskovskaya obl., 144001 (RU); KUPTSOV, Sergey Viktorovich, Elektrostal, Moskovskaya obl., 144009 (RU); ANTOSCHENKOV, Alexsey Yur'yevich, Elektrostal, Moskovskaya obl., 144010 (RU); YELAGIN, Yuriy Nikolaeyvich, Elektrostal, Moskovskaya obl., 144009 (RU); SHEVCHENKO, Leonid Evgen'evich, Elektrostal, Moskovskaya obl., 142407 (RU)
(74) Representative: Friese Goeden Patentanwälte PartGmbB
(86) International application number: PCT/RU2019/000346
(87) International publication number: WO 2020/101527

(57) **Abstract**

The invention is applicable to the nuclear industry and may be used during the manufacture of fuel elements (FE) for automatic monitoring of alpha contamination on their surface.

The tester for monitoring alpha contamination of fuel elements containing tandem loading module and unloading module of fuel elements is provided, each having a fixed frame with cradles, position indicators of fuel elements, measurement module located between the loading module and unloading module, which includes the detection units of alpha radiation from the surface of fuel elements, pneumatic cylinders with position indicators of the rods for samples forwarding with the source of alpha radiation. The loading module is supplied with movable automated carriage with cradles for forwarding fuel elements to the measurement module and then to the unloading module, besides the loading and unloading modules are provided with movable racks for placing the fuel elements on the cradles of the modules and carriage, and the samples with natural uranium isotopes are used as the source of alpha radiation for setup of the measurement module.

The technical result of the invention consists in providing efficient automatic control of alpha contamination of the surface of fuel elements with the highlighting of the metrological standardized characteristics, carrying out yield to waste or suitable, ensuring reliability and safety during transportation of the fuel elements as part of the automated manufacturing line of fuel elements.

## Description

### TECHNICAL FIELD OF THE INVENTION

The invention is applicable to the nuclear industry and may be used during the manufacture of fuel elements (FE) for automatic monitoring of alpha contamination on their surface.

The assembly process of fuel columns to FE is subject to radiation pollution of the surface of sealed in finished materials. Thus the parameters of newly manufactured fuel element are subject to monitoring under the internal quality system. Radiation contamination monitoring of the surface of FE is made by α-rays of uranium present on the surface of the group of products in the form of uranium dioxide radiation dust. Moreover, the activity of α-particles of the uranium isotopes mixture exceeding the given rejectable level signalizes about the inadmissible radiation contamination of the FE surface, in turn, leading to radiation contamination of the fuel elements which are transported to the nuclear power plants.

### PRIOR ART

The automatic tester of the resuspended alpha radiation of fuel elements is known, which contains the cassette installed in a tray in the contact position comprising of a case in which the feed and take-up cloth tape of two bobbins each with tape quantity detector, guiding rollers, tape tension detector, placed above the tape with offset by a step from the contacting position of the tape with the fuel element, related to the measuring apparatus alpha-detector and placed below the tape crimping mechanism to the FE surface placed below the tape, which includes two movable shaped segments of length equal to the tape width, and with inner diameter along the FE diameter with resilient spacers connected by the stem with spring block connected through the force sensor with electro cylinder having a stepper motor controlled by holddown dynamometer of the segments. The ribbon coil rotation mechanism in the carriage is provided with a stepping motor for normal displacement of the ribbon in the cassette, and the measurement apparatus and force dynamometer are connected with a logic controller connected with an industrial computer (RU 2615036, published on 03/04/2017). The tester allows automation of the process of determining fuel elements contamination as part of the automated line using the dry wipe method. The downside is low operational efficiency of monitoring conditioned by the step by step (successive) loading of fuel elements to the measurement position during simultaneous complexity of the design of used equipment for tightening the coarse calico ribbon.

The dry wipe method is well-known among the methods for determining the radiation contamination of the surface of products, which represents the method of measuring the levels of radioactive contamination (RC) by determining the activity taken from the tested surface by contact. The following materials are used for taking RC: cotton fabric, gauze, FP fabric, wad of cotton wool. The disadvantages of this method can include the high number of manual operations, and necessity to use "auxiliary devices, materials and chemicals", use thereof is not expedient as part of the automated production line of the products (Methodological Guidelines 2.6.1.016-99 "Monitoring radioactive nuclide contamination of the surfaces of operating rooms, vehicle equipment and other facilities" item 6.3).

The sampling device with contaminated surface of suction pump comprising of casing, with the filtering element with inlet and outlet branch pipe installed inside it is well-known. The lower part of the casing is executed as open, the supply branch pipes are connected with the holes executed in the lower part of the casing and located at an angle to the investigated surface. (RU No. 2408003, published on 27/12/2010). The deficient efficiency and automation radiation contamination monitoring, conditioned by the availability of absorbent filters subject to replacement, removal and additional monitoring of the accumulated particles should be counted as the disadvantages of this device.

The closest analog of the invention is the control and rejection line of fuel elements, which contain the transport container for FE loading on the inclined table with shutoff devices of their single-piece feed to the roll-table, along which the control and rejection mechanism of fuel elements by internal defects, control and rejection mechanism of fuel elements by diameter and control and rejection mechanism of fuel elements by out of straightness are located. The line is additionally provided with a transport and operation module which includes the detection units of alpha radiation on the surface of fuel elements, rotor with disks with rotor position detection unit, with control unit of rotor drive and power supply unit, photo sensors of fuel element availability at the loading position, closed monitoring sources of alpha radiation with plutonium 239 radionuclide with activity of 1,000 Bq, processing and control module, means of transportation for unloading monitored fuel elements with mechanism for separation into two flows: clean and polluted FEs with feed to the relevant transport container (RF 2242297, published on 20/12/2004). The disadvantage of this device is the use as the means of transport for FE loading and unloading, trippers and inclined table with shutoff devices leading to additional mechanical loads and skew distortions of the products under the impact of force of gravity that may lead to shutdowns and reduction of the monitoring efficiency and rejection of the products. The rotor with discs and cradles located on the generatrix limits the number of products (maximum number 13 pcs) for the measurement position. The use of weapons grade plutonium (Pu-239) as the alpha emitter in the covered samples for adjustment and calibration of the device is not expedient due to heightened requirements for accounting and control of nuclear materials, as well as the nuclear and radiation safety requirements. The recording of the total count rate of the device conditions the total pollution of the surface of a group of fuel elements and does not allow highlight the surface pollution of an individual product considering its geometric sizes as part of various groups of products, in addition the IAEA requirements for the accounting and control systems of nuclear materials stipulates standardization of data on isotopes used in the manufacture.

These disadvantages are not found in the apparatus for monitoring alpha contamination of the fuel elements.

### SUMMARY OF THE INVENTION

The task of invention is to create a device with possibility of automatic adjustment based on the natural uranium isotope samples for automatic monitoring of alpha contamination of the fuel element surface in the process of their production with strict requirements for the reliability of product transportation which excludes their drift leading to skew distortions and additional mechanical impacts on the cladding of fuel elements.

The technical result of the invention consists in providing efficient automatic control of alpha contamination of the surface of fuel elements with the highlighting of the metrological standardized characteristics, carrying out yield to waste or suitable, providing reliability and safety during transportation of the fuel elements as part of the automated manufacturing line of fuel elements.

The technical result is achieved by the alpha-contamination tester of fuel elements containing tandem loading module and unloading module of fuel elements, each of which has a fixed frame with cradles, position indicators of fuel elements, measurement module located between the loading module and unloading module, which includes the detection units of alpha radiation from the surface of fuel elements, pneumatic cylinders with position indicators of the rods for forwarding the samples with source of alpha radiation. The loading module is supplied with movable automated carriage with cradles for forwarding fuel elements to the measurement module and then to the unloading module, besides the loading and unloading modules are provided with movable racks for placing the fuel elements on the cradles of the modules and carriage, and the samples with natural uranium isotopes are used as the source of alpha radiation for setup of the measurement module.

The alpha-contamination tester of fuel elements contains an automated loading module 1 comprising of product number reader 2, fixed frame with cradles 3, chain-drive driven motor 4, serving as the actuating mechanism of the movable rack with cradles 5. The movable rack 5 is designed for step-wise selection of the products from the previous operation on the process line and subsequent filling of the vacant position on the cradles of the accumulator of automatic movable rack 6, as well as the corrector 7 required for aligning the products with respect to the edge of the loading module after filling the carriage accumulator 6 with the products. The control system based on the controller 8 as part of the control module 23, electromagnetic sensors 9, 10, 11, 12, 13, 14, 15, 16, 17 and stepping motor 29 provide further transportation and exact positioning of the products on the measurement module 28 consisting of a pneumatic unit of automatic vertical feed of setup samples of alpha radiation in the form of plates 25. The plates are executed with spraying of natural uranium isotopes. The metering unit includes the alpha radiation detection units 26 (for example, BDZA-2-01-EM type, based on ZnS fluorescent material) and protective shutters 27 preventing the contact of light with the fluorescent material. Radioactive dust of uranium dioxide on the surface of fuel element claddings is used as the source of radiation. The measurement results are processed based on the summator 24 (for example of type Summator-OIM). The results are output to the operator panel as part of the control module 23. Following the monitoring the movable carriage 6 further transports the products to the unloading module 30, in turn activating the fixed frame with cradles 31 relative thereof the products are transported using the movable rack 32 and drive based on chain-drive 33.

### EMBODIMENT OF THE INVENTION

The tester operates as follows.

The numbered products 34 with the previous process operation are input to the fixed frame with cradles 3 of the loading module 1, levelled with respect to the edge of the tester using an auto operator corrector 7 and are entered in the control system data base using the reader 2, subsequent displacements of the product on the fixed frame of the loading module is made using a movable rack 5 of the motor with drive 4 based on chain-drive until all the cradles on the fixed frame 3 shall not be filled, thereafter the accumulator of movable carriage with cradles 6 is filled using the movable rack 5, which includes the electromagnetic transducers 12, 14 for precise positioning relative to the loading module 1 with rack 22 lower position sensor, evacuation module 30 and measurement module 28, stepping motor 29 with drive displaces the carriage with products on the measurement module 28 up to the central position relative to the group of alpha radiation detection units 26, protected by customized screens 27 not allowing light contact with the fluorescent materials of the detection units, preliminary setup and calibration of the alpha-contamination tester of the product surface is made using pneumatic feed of the sample executed based on metal plates 25 with spraying of uranium radionuclides (²³⁴U, ²³⁵U, ²³⁸U), alpha radiation is recorded on irradiation of uranium dioxide radioactive dust on the surface of claddings following the recording of alpha radiation emanating from the surface of fuel elements, the tester shows the average alpha-activity of the mixture of uranium isotopes found on the product surface on the operator panel, Bq; average surface alpha-activity of the mixture of uranium isotopes on the product surface, Bq/cm²; mass of uranium-235 radionuclide on the product surface and referred to the area of its surface, enter the measurement results in the database with the characteristics of surface contamination of products having passed the test and correlated with their number, further displacement of the carriage with the products is made to the unloading module 30 at the expense of the carriage position detectors 17, 18 and product availability detectors on the unloading module 19, 20, unloading of the products on the fixed frame 31 of the module is made using the movable rack 32, rack 21 and drive 33 lower position sensor.

The operating principle of the tester on surface contamination measurement of the products consists in recording and recalculating the total flux of α-particles of the measured sample using the summator 24 and quick calculation module 35 as part of the controller 8 in the values of average alpha-activity of the mixture of uranium isotopes located on the product surface, Bq; average alpha-activity of the mixture of uranium isotopes located on the product surface, Bq/cm²; mass of uranium-235 radionuclide located on the product surface and relative to the area of its surface.

The tester allows determine the surface contamination of fuel elements with high efficiency and performance with highlighting of the metrological standardized characteristics of contamination with product yield to defective and usable by the testing levels, form database, providing reliability and safety during transportation of fuel elements as part of the automated production line of fuel elements, as well as transfer the obtained data to the operator panel without use of industrial computer as part of the device using automatic feed of reference blocks made of natural uranium isotopes.

### BRIEF DESCRIPTION OF DRAWINGS

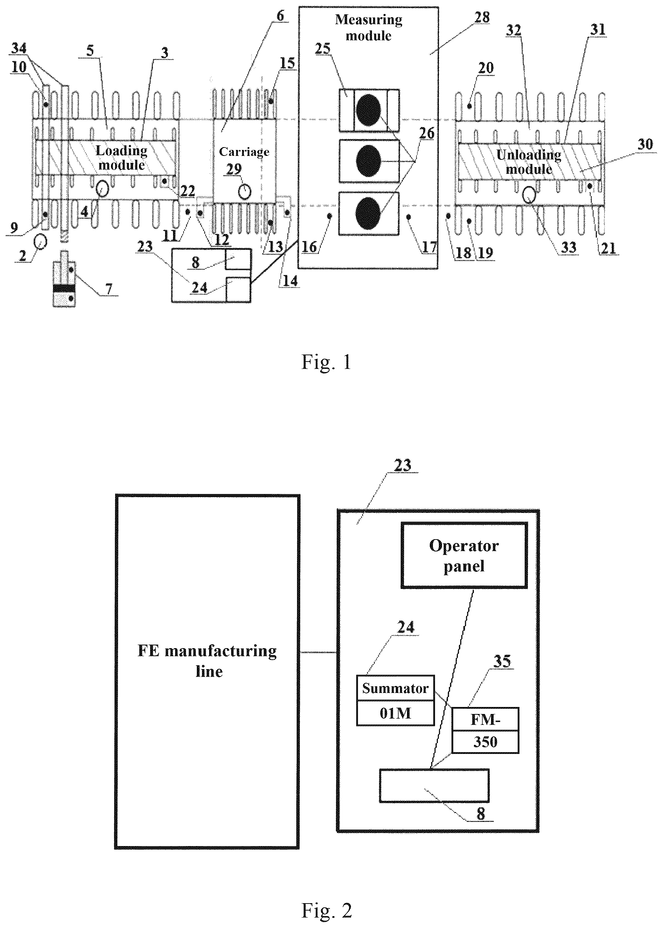

The schematic diagram of the tester is shown in fig. 1.

The control system cabinet is shown in fig. 2.

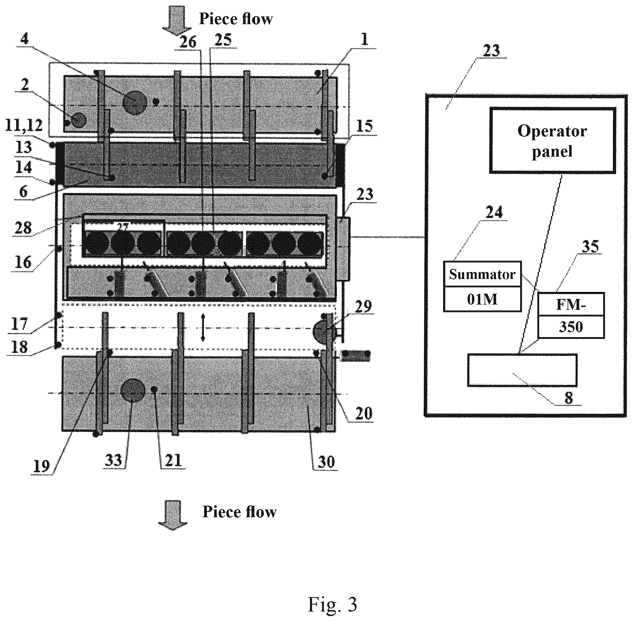

The complete functional chart of the proposed tester is shown in fig. 3.

## Claims

1. Fuel elements alpha-contamination tester, containing the fuel elements tandem loading module and unloading module, each of which includes a fixed frame with cradles, position sensors of fuel elements, measurement module located between the loading module and unloading module, which includes the detection units of alpha radiation from the surface of fuel elements, pneumatic cylinders with position sensors of rods for forwarding samples with source of alpha radiation, **characterized in that** the loading module is provided with movable automated carriage with cradles for forwarding fuel elements to the measurement module and thereafter to the unloading module, besides the loading and unloading module are equipped with movable racks for placing the fuel elements on the cradles of the modules and carriage, and the samples with natural uranium isotopes are used as the source of alpha radiation for adjustment of the measurement module.

2. The tester as per item 1 features the products flow distribution carried out by a corrector.

3. The tester as per item 1 features that the carriage displacement by using a stepping motor with drive.

4. The tester as per item 1 features the digital processing of the recorded alpha radiation from the surface of products is performed by using a summator, and the quick counting module as part of the industrial controller with output of the monitoring results to the operator panel.

5. The tester as per item 1 features the detection units as part of the measurement module are covered against light by the protective shutters.

6. The tester as per item 1 features the processing of signals from the position indicators and transfer of control signals to all the actuating mechanisms by using a controller as the tester control system.
